# EUROPÄISCHE PATENTSCHRIFT

(11) **EP 2 529 854 B1**
(45) Veröffentlichungstag und Bekanntmachung des Hinweises auf die Patenterteilung: **23.10.2013**
(21) Anmeldenummer: 11168185.4
(22) Anmeldetag: 31.05.2011
(51) Int. Cl.: B21D 37/04, B21D 37/14

(54) **Verwendung einer Werkzeugkassette für ein Bearbeitungswerkzeug für die Blechbearbeitung**
Use of a tool cassette for a processing tool for processing sheet metal
Utilisation d`un magasin d'outils pour un outil de traitement destiné au traitement de tôle

(43) Veröffentlichungstag der Anmeldung: 05.12.2012
(73) Patentinhaber: TRUMPF Werkzeugmaschinen GmbH + Co. KG, 71254 Ditzingen (DE)
(72) Erfinder: Schindewolf, Leonard, 70176 Stuttgart (DE); Haug, Patrick, 72296 Schopfloch (DE)
(74) Vertreter: Kohler Schmid Möbus

(56) Entgegenhaltungen:
- US-A- 4 485 549
- US-A1- 2007 191 199

## Beschreibung

Die Erfindung betrifft eine Werkzeugkassette zur lösbaren Halterung von Werkzeugteilen eines mehrteiligen Bearbeitungswerkzeuges für die Bearbeitung von Blechen,
- mit einer Stempelhalterung zur lösbaren Halterung eines als Bearbeitungsstempel ausgebildeten Werkzeugteils,
- mit einer Matrizenhalterung zur lösbaren Halterung eines als Bearbeitungsmatrize ausgebildeten Werkzeugteils,
- mit einem Kassettengrundkörper, der an der von den freien Enden der Stempelhalterung und der Matrizenhalterung abliegenden Seite von einer Grundkörperrückwand begrenzt ist,
- mit einer zu der Vorderseite des Kassettengrundkörpers hin offenen Wandaussparung der Grundkörperrückwand zur Aufnahme einer dritten Werkzeugteilhalterung sowie
- mit einer an dem Kassettengrundkörper vorgesehenen grundkörperseitigen Befestigungseinrichtung mittels derer eine in der Wandaussparung aufgenommene dritte Werkzeugteilhalterung mit dem Kassettengrundkörper lösbar verbindbar ist,
wobei die Stempelhalterung und die Matrizenhalterung an der Vorderseite des Kassettengrundkörpers gegenüber diesem vorkragen und unter Ausbildung eines Zwischenraumes übereinander angeordnet sind und wobei die Grundkörperrückwand des Kassettengrundkörpers die zu der Vorderseite des Kassettengrundkörpers hin offene Wandaussparung auf Höhe des Zwischenraumes zwischen der Stempelhalterung und der Matrizenhalterung aufweist.

Werkzeugkassetten der vorstehenden Art werden vielfach an Werkzeugmaschinen für die Blechbearbeitung und dort als Bestandteil eines Werkzeugmagazins eingesetzt. In dem Werkzeugmagazin werden Bearbeitungswerkzeuge für den Einsatz an einer Bearbeitungseinrichtung der Werkzeugmaschine vorgehalten. Zu Beginn der Blechbearbeitung werden die Werkzeugteile des benötigten Bearbeitungswerkzeuges in der Regel automatisiert aus der betreffenden Werkzeugkassette in Werkzeugaufnahmen an der Bearbeitungseinrichtung der Werkzeugmaschine eingewechselt. Nach Erledigung der Bearbeitungsaufgabe werden die Werkzeugteile, wiederum in aller Regel automatisiert, von den Werkzeugaufnahmen der Bearbeitungsmaschine in die Werkzeugkassette rücküberführt.

Je nach Bearbeitungsaufgabe sind die Werkzeugkassetten mit verschiedenartigen Bearbeitungswerkzeugen, beispielsweise mit einem mehrteiligen Stanzwerkzeug oder mit einem mehrteiligen Umformwerkzeug bestückt. Die Stempelhalterung der Werkzeugkassette dient in den genannten Beispielsfällen zur lösbaren Fixierung eines Stanzstempels oder eines Umformstempels, die Matrizenhalterung der Werkzeugkassette zur lösbaren Fixierung einer Stanzmatrize oder einer Umformmatrize. An Werkzeugkassetten für Stanzwerkzeuge ist zusätzlich zwischen der Stempelhalterung und der Matrizenhalterung eine Abstreiferhalterung vorgesehen, mittels derer ein als dritter Werkzeugteil von Stanzwerkzeugen vorgesehener Abstreifer lösbar an der Werkzeugkassette festgelegt wird. Umformwerkzeuge weisen einen vergleichbaren dritten Werkzeugteil nicht auf. Allerdings übersteigt die Bauhöhe von Umformmatrizen in einer Vielzahl von Fällen die Bauhöhe der von einer Werkzeugkassette aufzunehmenden Stanzmatrizen. Die größere Bauhöhe der Umformmatrizen kann insbesondere darauf zurückzuführen sein, dass die Umformmatrizen mit einem sogenannten "Auswerfer" für das umgeformte Werkstück versehen sind.

Eine Werkzeugkassette für Stanzwerkzeuge ist offenbart in US 4,485,549 A. Ein Stempelhalter, ein Matrizenhalter und ein Abstreiferhalter sind dabei lösbar an einem Kassettengrundkörper angebracht.

Eine weitere Werkzeugkassette für Stanzwerkzeuge ist bekannt aus WO 2007/ 097824 A2. Diese Druckschrift offenbart eine Werkzeugkassette mit einem Kassettengrundkörper, an welchem in vertikaler Richtung übereinanderliegend zwei Stempelhaltearme, eine Abstreiferhalterung sowie zwei Matrizenhaltearme montiert sind. Die Abstreiferhalterung umfasst eine bogenförmige Auflage für einen Abstreifer sowie eine gleichfalls bogenförmige Grundplatte, auf welcher die Auflage für den Abstreifer aufsitzt. Die Auflage für den Abstreifer ist mit der sie unterfangenden Grundplatte verschraubt und außerdem über Arme, die zu der Rückseite des Kassettengrundkörpers hin vorragen, an diesem abgestützt. Die bogenförmige Grundplatte der Abstreiferhalterung ist an den Kassettengrundkörper angeformt und steht an der Vorderseite des Kassettengrundkörpers in horizontaler Richtung so weit vor, dass ihre Bogenschenkel mit den Stempelhaltearmen und auch mit den Matrizenhaltearmen überlappen. Soll die vorbekannte Werkzeugkassette an Stelle eines Stanzwerkzeuges ein Umformwerkzeug aufnehmen, so bilden die Bogenschenkel der Grundplatte der Abstreiferhalterung eine Störkontur insbesondere für die an den Matrizenhaltearmen festzulegende Bearbeitungsmatrize.

Die Aufgabe der vorliegenden Erfindung besteht darin, die Verwendbarkeit einer Werkzeugkassette ungeachtet unterschiedlicher Geometrien verschiedenartiger Bearbeitungswerkzeuge zu flexibilisieren.

Erfindungsgemäß gelöst wird diese Aufgabe durch den Gegenstand von Patentanspruch 1.

Im Falle der Erfindung wird eine Werkzeugkassette wahlweise zur lösbaren Halterung von Werkzeugteilen eines Stanzwerkzeuges oder zur lösbaren Halterung von Werkzeugteilen eines Umformwerkzeuges verwendet. Zu diesem Zweck ist die Grundkörperrückwand des Kassettengrundkörpers auf Höhe des Zwischenraumes zwischen der Stempelhalterung und der Matrizenhalterung mit einer Wandaussparung versehen, in welcher im Bedarfsfall eine Abstreiferhalterung als dritte Werkzeugteilhalterung lösbar festgelegt werden kann. Aufgrund der Nutzung der Grundkörperrückwand ist der Ort der Anbringung der dritten Werkzeugteilhalterung von der Stempelhalterung und von der Matrizenhalterung maximal entfernt. Ist die dritte Werkzeugteilhalterung nicht an dem Kassettengrundkörper montiert, so entfällt jegliche auf die dritte Werkzeugteilhalterung zurückzuführende Störkontur im Bereich der Stempelhalterung und der Matrizenhalterung und damit auch in dem Bereich der an der Stempelhalterung und der Matrizenhalterung lösbar fixierten Werkzeugteile. Dieser Umstand ist dann von Bedeutung, wenn die Werkzeugkassette ein Umformwerkzeug aufnimmt. In diesem Fall wird eine dritte Werkzeugteilhalterung nicht benötigt. Aufgrund des Fehlens der dritten Werkzeugteilhalterung können an der Stempelhalterung und an der Matrizenhalterung der Werkzeugkassette auch solche Werkzeugteile des Umformwerkzeuges festgelegt werden, für die eine dritte Werkzeugteilhalterung eine Störkontur darstellen würde.

Besondere Ausführungsarten der Erfindung nach Patentanspruch 1 ergeben sich aus den abhängigen Patentansprüchen 2 bis 8.

Für die Ausgestaltung der an der Grundkörperrückwand vorgesehenen und zur Aufnahme einer dritten Werkzeugteilhalterung dienenden Wandaussparung bieten sich verschiedene Möglichkeiten.

Gemäß Patentanspruch 2 ist die Wandaussparung der Grundkörperrückwand des Kassettengrundkörpers als Aufnahmetasche ausgebildet. Dementsprechend wird die Grundkörperrückwand von der Wandaussparung nicht vollständig durchdrungen. Ein dickenreduzierter Teil der Grundkörperrückwand bildet eine rückwärtige Begrenzung der Aufnahmetasche und kann als Tiefenanschlag für die von der gegenüberliegenden Seite in die Wandaussparung einzuführende Werkzeugteilhalterung genutzt werden.

Ausweislich Patentanspruch 3 ist die Wandaussparung in weiterer Ausgestaltung der Erfindung als fensterartige Aussparung der Grundkörperrückwand ausgebildet. Unter diesen Umständen kann die gesamte Dicke der Grundkörperrückwand zur Lagerung der dritten Werkzeugteilhalterung genutzt werden.

Die Erfindungsbauart nach Patentanspruch 4 kombiniert die in den Patentansprüchen 2 und 3 beschriebenen Ausführungsformen der Wandaussparung der Grundkörperrückwand.

Gemäß Patentanspruch 5 besteht in bevorzugter Ausgestaltung der Erfindung die Möglichkeit, die in der Wandaussparung der Grundkörperrückwand des Kassettengrundkörpers aufgenommene dritte Werkzeugteilhalterung unmittelbar an der Wandaussparung zu fixieren.

Ausweislich Patentanspruch 6 werden im Falle der Erfindung Schraubbefestlgungen und/oder Rastverbindungen zur Fixierung der dritten Werkzeugteilhalterung an dem Kassettengrundkörper bevorzugt.

Im Interesse einer möglichst einfachen Montage und Demontage der dritten Werkzeugteilhalterung sieht Patentanspruch 7 eine von der Rückseite des Kassettengrundkörpers her zugängliche grundkörperseitige Befestigungseinrichtung zur lösbaren Verbindung der dritten Werkzeugteilhalterung mit dem Kassettengrundkörper vor.

Zur lösbaren Fixierung eines von einer Werkzeugkassette aufgenommenen Abstreifers ist üblicherweise eine gesonderte Halteeinrichtung vorgesehen. Im Falle der Erfindungsbauart nach Patentanspruch 8 ist diese Halteeinrichtung Bestandteil der dritten Werkzeugteilhatterung. Dementsprechend wird mit der Demontage der dritten Werkzeugteilhalterung bzw. der Abstreiferhalterung auch die zur lösbaren Fixierung eines Abstreifers dienende Halteeinrichtung demontiert. Folglich bildet auch die Halteeinrichtung bei demontierter Abstreiferhalterung keine Störkontur an der Werkzeugkassette aus.

Nachfolgend wird die Erfindung anhand beispielhafter schematischer Darstellungen näher erläutert. Es zeigen:
- Figur 1: eine Werkzeugkassette bei demontierter Abstreiferhalterung,
- Figur 2: die Werkzeugkassette gemäß Figur 1 in der Vorderansicht in Richtung des Pfeils II in Figur 1,
- Figur 3: die Werkzeugkassette gemäß Figur 1 in der rückwärtigen Ansicht in Richtung des Pfeils III in Figur 1,
- Figur 4: die Werkzeugkassette gemäß Figur 1 bei montierter Abstreiferhalterung,
- Figur 5: die Werkzeugkassette gemäß Figur 4 in der Vorderansicht in Richtung des Pfeils V in Figur 4 und
- Figur 6: die Werkzeugkassette gemäß Figur 4 in der rückwärtigen Ansicht in Richtung des Pfeils VI in Figur 4.

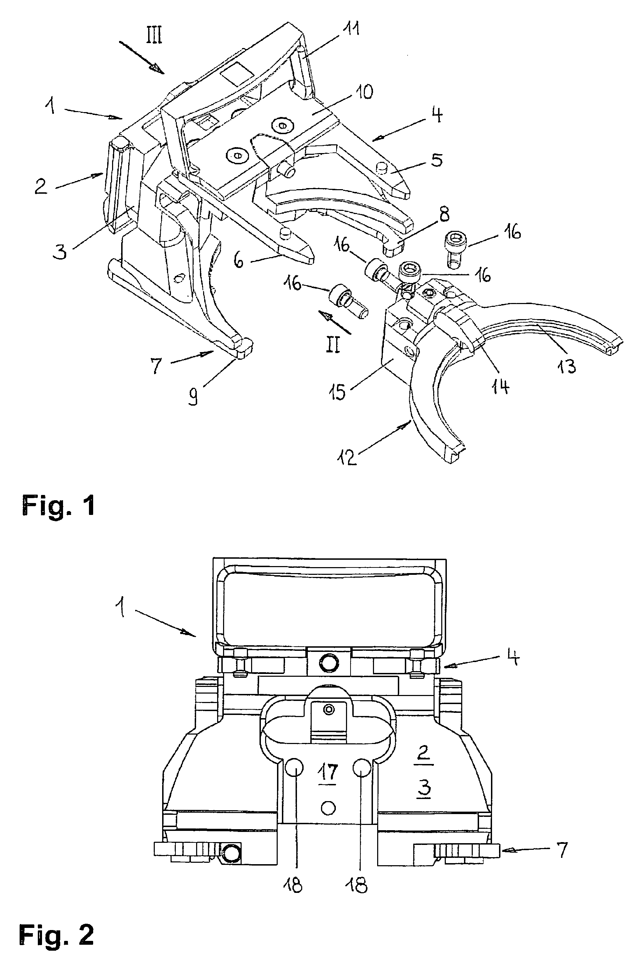

Gemäß Figur 1 umfasst eine Werkzeugkassette 1 einen Kassettengrundkörper 2 mit einer Grundkörperrückwand 3. In bekannter Weise ist der Kassettengrundkörper 2 als metallischer Gusskörper ausgeführt.

An dem Kassettengrundkörper 2 gelagert sind eine Stempelhalterung 4 mit zwei Stempelhaltearmen 5, 6 sowie eine Matrizenhalterung 7 mit zwei Matrizenhaltearmen 8, 9. Die Stempelhaltearme 5, 6 und die Matrizenhaltearme 8, 9 stehen an der Vorderseite des Kassettengrundkörpers 2 vor und sind an diesem um senkrechte Achsen schwenkbar gelagert. Ausgehend von ihrer Position gemäß Figur 1 können die Stempelhaltearme 5, 6 und die Matrizenhaltearme 8, 9 gegen die Wirkung von Rückstellfedern gespreizt werden. In vertikaler Richtung sind die Stempelhaltearme 5, 6 und die Matrizenhaltearme 8, 9 unter Ausbildung eines Zwischenraumes voneinander beabstandet.

An der Oberseite werden die dem Kassettengrundkörper 2 zugewandten Enden der Stempelhaltearme 5, 6 von einer mit dem Kassettengrundkörper 2 verschraubten Abdeckplatte 10 übergriffen. Über die Abdeckplatte 10 ist außerdem ein Haltebügel 11 der Werkzeugkassette 1 an dem Kassettengrundkörper 2 befestigt.

In dem Zustand gemäß Figur 1 dient die Werkzeugkassette 1 zur Aufnahme eines Umformwerkzeuges, das als Werkzeugteile einen Umformstempel sowie eine Umformmatrize umfasst. Der Umformstempel und die Umformmatrize sind üblicher Bauart und der Einfachheit halber nicht dargestellt. In gewohnter Weise wird der Umformstempel durch die Stempelhaltearme 5, 6 der Stempelhalterung 4 lösbar an der Werkzeugkassette 1 gehalten. Entsprechend ist die Umformmatrize mittels der Matrizenhaltearme 8, 9 der Matrizenhalterung 7 lösbar an der Werkzeugkassette 1 fixiert. Für den Umformstempel und die Umformmatrize steht an der Werkzeugkassette 1 ausreichend Raum zur Verfügung. Insbesondere lässt sich in dem Zwischenraum zwischen den Stempelhaltearmen 5, 6 und den Matrizenhaltearmen 8, 9 auch eine Umformmatrize mit verhältnismäßig großer Bauhöhe unterbringen.

Der Freiraum für die Werkzeugteile des Umformwerkzeuges steht zwischen der Stempelhalterung 4 und der Matrizenhalterung 7 deshalb zur Verfügung, weil die Werkzeugkassette 1 in dem Zustand gemäß Figur 1 nicht mit einer in Figur 1 im demontierten Zustand gezeigten dritten Werkzeugteilhalterung versehen ist. Bei der dritten Werkzeugteilhalterung handelt es sich um eine Abstreiferhalterung 12, die dann benötigt wird, wenn die Werkzeugkassette 1 ein Stanzwerkzeug üblicher Bauart aufzunehmen hat. Ein derartiges Stanzwerkzeug besteht bekanntermaßen aus einem Stanzstempel, einer Stanzmatrize sowie aus einem Abstreifer, der bei der stanzenden Blechbearbeitung dazu dient, das mit einer Ausstanzung versehene Blech beim Rückhub des Stanzstempels von diesem abzustreifen. Auch ein Stanzwerkzeug ist in den Abbildungen der Einfachheit halber nicht gezeigt.

Wie aus Figur 1 ersichtlich, weist die Abstreiferhalterung 12 eine bogenförmige Abstreiferlagerung 13, eine daran vorgesehene Halteeinrichtung 14 sowie einen rückwärtigen Montageansatz 15 auf.

Die Abstreiferlagerung 13 unterfängt den Rand eines von der Werkzeugkassette 1 aufgenommenen Abstreifers in Schwerkraftrichtung. An der von der Abstreiferlagerung 13 abliegenden Seite wird der Rand des Abstreifers von der Halteeinrichtung 14 übergriffen. An dem Montageansatz 15 kann mittels Befestigungsschrauben 16 eine Schraubverbindung zwischen der Abstreiferhalterung 12 und dem Kassettengrundkörper 2 hergestellt werden.

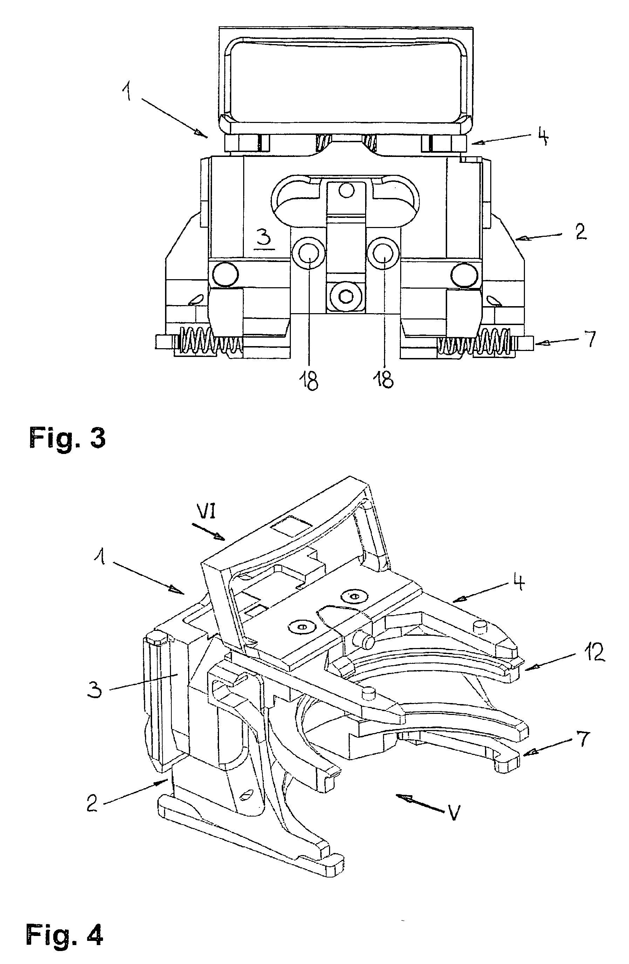

In der Ansicht des Kassettengrundkörpers 2 in der Blickrichtung II gemäß Figur 1 ist an der Grundkörperrückwand 3 des Kassettengrundkörpers 2 eine in die Grundkörperrückwand 3 eingearbeitete Wandaussparung 17 erkennbar (Figur 2). Die Wandaussparung 17 ist als Aufnahmetasche ausgebildet und in ihrer Kontur auf die Kontur des Montageansatzes 15 an der Abstreiferhalterung 12 abgestimmt. Die rückwärtige Begrenzung der Wandaussparung 17 wird von einem dickenreduzierten Bereich der Grundkörperrückwand 3 gebildet. In diesem dickenreduzierten Bereich ist die Grundkörperrückwand 3 mit grundkörperseitigen Befestigungseinrichtungen in Form von Befestigungsbohrungen 18 versehen. Die Befestigungsbohrungen 18 sind auch in Figur 3 erkennbar, welche die Werkzeugkassette 1 in der Ansicht in Richtung des Pfeils III gemäß Figur 1 zeigt.

Soll die Werkzeugkassette 1 aus dem Zustand gemäß Figur 1 für die Aufnahme eines Stanzwerkzeuges umgerüstet werden, so ist die Abstreiferhalterung 12 von der Vorderseite der Werkzeugkassette 1 her mit dem Montageansatz 15 in die Wandaussparung 17 an der Grundkörperrückwand 3 des Kassettengrundkörpers 2 einzuführen. Infolge der gegenseitigen Abstimmung der Kontur der Wandaussparung 17 einerseits und der Kontur des Montageansatzes 15 an der Abstreiferhalterung 12 andererseits wird der Montageansatz 15 in der Wandaussparung 17 im Wesentlichen spielfrei aufgenommen. Die rückwärtige Begrenzung der Wandaussparung 17 bildet einen Tiefenanschlag für den in die Wandaussparung 17 eingeschobenen Montageansatz 15.

Ist die Abstreiferhalterung 12 mit dem Montageansatz 15 in der Wandaussparung 17 aufgenommen, so werden von der Rückseite des Kassettengrundkörpers 2 her zwei Befestigungsschrauben 16 durch die Befestigungsbohrungen 18 hindurch in zugehörige und mit einem Innengewinde versehene Bohrungen an dem Montageansatz 15 eingedreht. Eine weitere Schraubverbindung zwischen der Abstreiferhalterung 12 und dem Kassettengrundkörper 2 wird von der Oberseite der Werkzeugkassette 1 her mittels der beiden übrigen Befestigungsschrauben 16 hergestellt.

Nach der Fixierung der Abstreiferhalterung 12 an dem Kassettengrundkörper 2 ergeben sich die Verhältnisse gemäß Figur 4. Die Werkzeugkassette 1 ist nun bereit für die Aufnahme eines dreiteiligen Stanzwerkzeuges.

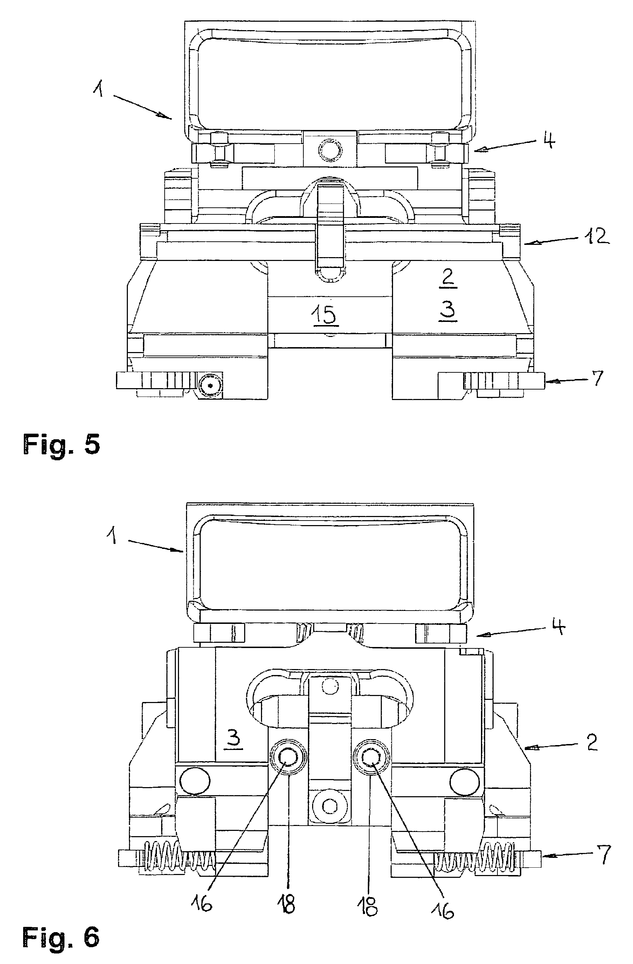

Figur 5 zeigt die Anordnung gemäß Figur 4 in der Vorderansicht (Pfeil V in Figur 4), in Figur 6 ist die Anordnung gemäß Figur 4 in der rückwärtigen Ansicht (Pfeil VI in Figur 4) dargestellt. In Figur 5 erkennbar ist unter anderem die Passgenauigkeit, mit welcher der Montageansatz 15 der Abstreiferhalterung 12 in die Wandaussparung 17 an der Grundkörperrückwand 3 des Kassettengrundkörpers 2 eingreift.

Soll an Stelle eines Stanzwerkzeuges erneut ein Umformwerkzeug an der Werkzeugkassette 1 festgelegt werden, so ist die Abstreiferhalterung 12 wieder zu demontieren, Zu diesem Zweck sind lediglich die Befestigungsschrauben 16 zu lösen. Anschließend kann die Abstreiferhalterung 12 aus der Wandaussparung 17 der Grundkörperrückwand 3 des Kassettengrundkörpers 2 entnommen werden. Die Werkzeugkassette 1 befindet sich dann wieder in dem Zustand gemäß den Figuren 1 bis 3.

## Patentansprüche

1. Verwendung einer Werkzeugkassette zur lösbaren Halterung von Werkzeugteilen eines mehrteiligen Bearbeitungswerkzeuges für die Bearbeitung von Blechen,
• mit einer Stempelhalterung (4) zur lösbaren Halterung eines als Bearbeitungsstempel ausgebildeten Werkzeugteils,
• mit einer Matrizenhalterung (7) zur lösbaren Halterung eines als Bearbeitungsmatrize ausgebildeten Werkzeugteils,
• mit einem Kassettengrundkörper (2), der an der von den freien Enden der Stempelhalterung (4) und der Matrizenhalterung (7) abliegenden Seite von einer Grundkörperrückwand (3) begrenzt ist,
• mit einer zu der Vorderseite des Kassettengrundkörpers (2) hin offenen Wandaussparung (17) der Grundkörperrückwand (3) zur Aufnahme einer dritten Werkzeugteilftalterung (12) sowie
• mit einer an dem Kassettengrundkörper (2) vorgesehenen grundkörperseltigen Befestigungseinrichtung (18) mittels derer eine in der Wandaussparung (17) aufgenommene dritte Werkzeugteilhalterung (12) mit dem Kassettengrundkörper (2) lösbar verbindbar ist,
wobei die Stempelhalterung (4) und die Matrizenhalterung (7) an der Vorderseite des Kassettengrundkörpers (2) gegenüber diesem vorkragen und unter Ausbildung eines Zwischenraumes übereinander angeordnet sind und wobei die Grundkörperrückwand (3) des Kassettengrundkörpers (2) die zu der Vorderseite des Kassettengrundkörpers (2) hin offene Wandaussparung (17) auf Höhe des Zwischenraumes zwischen der Stempelhalterung (4) und der Matrizenhalterung (7) aufweist,
**dadurch gekennzeichnet, dass**
die Werkzeugkassette wahlweise zur lösbaren Halterung von Werkzeugteilen eines Stanzwerkzeuges oder zur lösbaren Halterung von Werkzeugteilen eines Umformwerkzeuges verwendet wird,
• wobei bei der Verwendung der Werkzeugkassette zur lösbaren Halterung der Werkzeugteile eines Stanzwerkzeuges eine Abstreiferhalterung als dritte Werkzeugteilhalterung (12) zur lösbaren Halterung eines als Abstreifer ausgebildeten Werkzeugteils des Stanzwerkzeuges vorgesehen und in der Wandaussparung (17) der Grundkörperrückwand (3) aufgenommen und mittels der grundkörperseitigen Befestigungseinrichtung (18) mit dem Kassettengrundkörper (2) lösbar verbunden ist und
• wobei bei der Verwendung der Werkzeugkassette zur lösbaren Halterung der Werkzeugteile eines Umformwerkzeuges die als dritte Werkzeugteilhalterung (12) vorgesehene Abstreiferhalterung an dem Kassettengrundkörper (2) nicht montiert ist.

2. Verwendung einer Werkzeugkassette nach Anspruch 1, wobei an der Werkzeugkassette die Wandaussparung (17) der Grundkörperrückwand (3) als Aufnahmetasche ausgebildet ist, die zu der Vorderseite des Kassettengrundkörpers (2) hin offen und in Gegenrichtung durch einen dickenreduzierten Teil der Grundkörperrückwand (3) begrenzt ist.

3. Verwendung einer Werkzeugkassette nach einem der vorhergehenden Ansprüche, wobei an der Werkzeugkassette die Wandaussparung (17) der Grundkörperrückwand (3) als fensterartige Aussparung der Grundkörperrückwand (3) ausgebildet ist.

4. Verwendung einer Werkzeugkassette nach Anspruch 2, wobei an der Werkzeugkassette der dickenreduzierte Teil der Grundkörperrückwand (3), welcher die als Wandaussparung (17) vorgesehene Aufnahmetasche begrenzt, mit einer fensterartigen Öffnung versehen ist.

5. Verwendung einer Werkzeugkassette nach einem der vorhergehenden Ansprüche, wobei an der Werkzeugkassette die grundkörperseitige Befestigungseinrichtung (18) zur lösbaren Verbindung der dritten Werkzeugteilhalterung (12) mit dem Kassettengrundkörper (2) an einer Wand der Wandaussparung (17) der Grundkörperrückwand (3) vorgesehen ist.

6. Verwendung einer Werkzeugkassette nach einem der vorhergehenden Ansprüche, wobei an der Werkzeugkassette die grundkörperseitige Befestigungseinrichtung (18) zur lösbaren Verbindung der dritten Werkzeugteilhalterung (12) mit dem Kassettengrundkörper (2) als Schraubbefestigungseinrichtung und/oder als Rasteinrichtung ausgebildet ist.

7. Verwendung einer Werkzeugkassette nach einem der vorhergehenden Ansprüche, wobei an der Werkzeugkassette die grundkörperseitige Befestigungseinrichtung (18) zur lösbaren Verbindung der dritten Werkzeugteilhalterung (12) mit dem Kassettengrundkörper (2) von der Rückseite des Kassettengrundkörpers (2) her zugänglich ist.

8. Verwendung einer Werkzeugkassette nach einem der vorhergehenden Ansprüche, wobei an der Werkzeugkassette die als dritte Werkzeugteilhalterung (12) vorgesehene Abstreiferhalterung eine Abstreiferlagerung (13) zur Lagerung eines Abstreifers in Schwerkraftrichtung sowie eine Halteeinrichtung (14) zur lösbaren Fixierung eines an der Abstreiferlagerung (13) gelagerten Abstreifers an der Abstreiferhalterung aufweist.

## Claims

1. The use of a tool cartridge for detachably holding tool parts of a multi-part processing tool for the processing of metal sheets,
• having a punch holder (4) for detachably holding a tool part in the form of a processing punch, and
• having a die holder (7) for detachably holding a tool part in the form of a processing die,
• having a cartridge base body (2) which is delimited by a base body rear wall (3) at the side remote from the free ends of the punch holder (4) and the die holder (7),
• having a wall opening (17) of the base body rear wall (3), which wall opening (17) is open towards the front side of the cartridge base body (2), for receiving a third tool part holder (12), and
• having, provided on the cartridge base body (2), a base-body-side fastening device (18) by means of which a third tool part holder (12) received in the wall opening (17) is detachably connectable to the cartridge base body (2),
the punch holder (4) and the die holder (7) projecting from the cartridge base body (2) at the front side thereof and being arranged one above the other to form an intervening space, and the base body rear wall (3) of the cartridge base body (2) having the wall opening (17), which is open towards the front side of the cartridge base body (2), at the level of the intervening space between the punch holder (4) and the die holder (7),
**characterised in that**
the tool cartridge is selectively used for detachably holding tool parts of a punching tool or for detachably holding tool parts of a forming tool,
• wherein, when the tool cartridge is used for detachably holding the tool parts of a punching tool, a stripper holder is provided as the third tool part holder (12) for detachably holding a tool part of the punching tool in the form of a stripper and is received in the wall opening (17) of the base body rear wall (3) and is detachably connected to the cartridge base body (2) by means of the base-body-side fastening device (18), and
• wherein, when the tool cartridge is used for detachably holding the tool parts of a forming tool, the stripper holder provided as the third tool part holder (12) is not mounted on the cartridge base body (2).

2. The use of a tool cartridge according to claim 1, wherein at the tool cartridge the wall opening (17) of the base body rear wall (3) is constructed as a receiving pocket which is open towards the front side of the cartridge base body (2) and which is delimited in the opposite direction by a reduced-thickness portion of the base body rear wall (3).

3. The use of a tool cartridge according to either of the preceding claims, wherein at the tool cartridge the wall opening (17) of the base body rear wall (3) is constructed as a window-like opening of the base body rear wall (3).

4. The use of a tool cartridge according to claim 2, wherein at the tool cartridge the reduced-thickness portion of the base body rear wall (3), which portion delimits the receiving pocket provided as a wall opening (17), is provided with a window-like aperture.

5. The use of a tool cartridge according to any one of the preceding claims, wherein at the tool cartridge the base-body-side fastening device (18) for detachable connection of the third tool part holder (12) to the cartridge base body (2) is provided at a wall of the wall opening (17) of the base body rear wall (3).

6. The use of a tool cartridge according to any one of the preceding claims, wherein at the tool cartridge the base-body-side fastening device (18) for detachable connection of the third tool part holder (12) to the cartridge base body (2) is in the form of a screwed fastening device and/or a snap-in device.

7. The use of a tool cartridge according to any one of the preceding claims, wherein at the tool cartridge the base-body-side fastening device (18) for detachable connection of the third tool part holder (12) to the cartridge base body (2) is accessible from the rear side of the cartridge base body (2).

8. The use of a tool cartridge according to any one of the preceding claims, wherein at the tool cartridge the stripper holder provided as the third tool part holder (12) has a stripper support (13) for supporting a stripper in the direction of gravity and has a holding device (14) for detachably fixing a stripper supported on the stripper support (13) to the stripper holder.

## Revendications

1. Utilisation d'une cartouche d'outil pour le maintien amovible de parties d'outil d'un outil d'usinage en plusieurs parties destiné à l'usinage de tôles,
- avec un support de poinçon (4) pour le maintien amovible d'une partie d'outil réalisée sous la forme d'un poinçon d'usinage,
- avec un support de matrice (7) pour le maintien amovible d'une partie d'outil réalisée sous la forme d'une matrice d'usinage,
- avec un corps de base de cartouche (2), qui est délimité par une paroi arrière de corps de base (3) sur le côté éloigné des extrémités libres du support de poinçon (4) et du support de matrice (7),
- avec un évidement de paroi (17) de la paroi arrière de corps de base (3), ouvert en direction du côté avant du corps de base de cartouche (2) et destiné à recevoir un troisième support de partie d'outil (12),
- et avec un dispositif de fixation (18) côté corps de base, prévu sur le corps de base de cartouche (2) et au moyen duquel un troisième support de partie d'outil (12) reçu dans l'évidement de paroi (17) peut être assemblé de manière amovible au corps de base de cartouche (2),
sachant que le support de poinçon (4) et le support de matrice (7) dépassent du corps de base de cartouche (2) sur le côté avant de ce dernier et sont disposés l'un au-dessus de l'autre en formant un espace intermédiaire, et sachant que la paroi arrière de corps de base (3) du corps de base de cartouche (2) présente l'évidement de paroi (17), ouvert en direction du côté avant du corps de base de cartouche (2), à hauteur de l'espace intermédiaire entre le support de poinçon (4) et le support de matrice (7),
**caractérisée en ce que** la cartouche d'outil est utilisée au choix pour le maintien amovible de parties d'outil d'un outil de découpage ou pour le maintien amovible de parties d'outil d'un outil de formage,
- sachant que lors de l'utilisation de la cartouche d'outil pour le maintien amovible des parties d'outil d'un outil de découpage, un support de racleur est prévu comme troisième support de partie d'outil (12) pour le maintien amovible d'une partie d'outil de l'outil de découpage réalisée sous la forme d'un racleur, et est reçu dans l'évidement de paroi (17) de la paroi arrière de corps de base (3) et assemblé de manière amovible au corps de base de cartouche (2) au moyen du dispositif de fixation (18) côté corps de base,
- et sachant que lors de l'utilisation de la cartouche d'outil pour le maintien amovible des parties d'outil d'un outil de formage, le support de racleur prévu comme troisième support de partie d'outil (12) n'est pas monté sur le corps de base de cartouche (2).

2. Utilisation d'une cartouche d'outil selon la revendication 1, sachant que sur la cartouche d'outil, l'évidement de paroi (17) de la paroi arrière de corps de base (3) est réalisé sous la forme d'une poche réceptrice, qui est ouverte en direction du côté avant du corps de base de cartouche (2) et qui, en direction contraire, est délimitée par une partie d'épaisseur réduite de la paroi arrière de corps de base (3).

3. Utilisation d'une cartouche d'outil selon l'une des revendications précédentes, sachant que sur la cartouche d'outil, l'évidement de paroi (17) de la paroi arrière de corps de base (3) est réalisé sous la forme d'un évidement du genre fenêtre de la paroi arrière de corps de base (3).

4. Utilisation d'une cartouche d'outil selon la revendication 2, sachant que sur la cartouche d'outil, la partie d'épaisseur réduite de la paroi arrière de corps de base (3), qui délimite la poche réceptrice prévue comme évidement de paroi (17), est pourvue d'une ouverture du genre fenêtre.

5. Utilisation d'une cartouche d'outil selon l'une des revendications précédentes, sachant que sur la cartouche d'outil, le dispositif de fixation (18) côté corps de base destiné à l'assemblage amovible du troisième support de partie d'outil (12) avec le corps de base de cartouche (2) est prévu sur une paroi de l'évidement de paroi (17) de la paroi arrière de corps de base (3).

6. Utilisation d'une cartouche d'outil selon l'une des revendications précédentes, sachant que sur la cartouche d'outil, le dispositif de fixation (18) côté corps de base destiné à l'assemblage amovible du troisième support de partie d'outil (12) avec le corps de base de cartouche (2) est réalisé sous la forme d'un dispositif de fixation par vissage et/ou sous la forme d'un dispositif d'enclenchement.

7. Utilisation d'une cartouche d'outil selon l'une des revendications précédentes, sachant que sur la cartouche d'outil, le dispositif de fixation (18) côté corps de base destiné à l'assemblage amovible du troisième support de partie d'outil (12) avec le corps de base de cartouche (2) est accessible du côté arrière du corps de base de cartouche (2).

8. Utilisation d'une cartouche d'outil selon l'une des revendications précédentes, sachant que sur la cartouche d'outil, le support de racleur prévu comme troisième support de partie d'outil (12) présente un appui de racleur (13) pour supporter un racleur dans la direction de la gravité, et un dispositif de maintien (14) pour l'immobilisation amovible sur le support de racleur d'un racleur supporté par l'appui de racleur (13).
